# EUROPEAN PATENT APPLICATION

(11) **EP 1 264 788 A1**
(43) Date of publication of application: **11.12.2002**
(21) Application number: 02011452.6
(22) Date of filing: 24.05.2002
(51) Int. Cl.: B65G 47/91, B65G 47/90

(54) **Unit for transferring panels of wood or similar**

(30) Priority: 25.05.2001 IT TO20010504
(71) Applicant: ISP Systems S.r.l., 61100 Pesaro (IT)
(72) Inventor: Pritelli, Giuseppe, 47033 Cattolica (IT)
(74) Representative: Cerbaro, Elena, Dr.

(57) **Abstract**

A unit for transferring panels (2) of wood or similar has a loading station (3) for receiving at least two panels (2) fed to the loading station (3) along respective substantially parallel paths (P); an unloading station (4); and a pickup and conveying device (25) for transferring the panels (2) simultaneously between the loading station (3) and unloading station (4).

## Description

The present invention relates to a unit for transferring panels of wood or similar.

In the processing of panels of wood or similar, a transfer unit is used for transferring panels between a loading station at the output of a first operating unit, and an unloading station at the input of a second operating unit.

The transfer units used to transfer panels between the loading and unloading stations are normally of two types.

In a first type, the transfer unit is designed to pick up and transfer one panel at each operating cycle; and, in a second type, the transfer unit is designed to pick up and transfer, at each operating cycle, a group of panels aligned with one another in a given direction.

It is an object of the present invention to provide a unit for transferring panels of wood or similar, which is cheap and easy to implement, and, at the same time, provides for a high degree of flexibility as regards both the number and arrangement of the panels to be picked up and transferred at each operating cycle of the transfer unit.

According to the present invention, there is provided a unit for transferring panels of wood or similar, characterized by comprising a loading station for receiving at least two groups of panels, said groups each comprising at least one panel, and being fed to the loading station along respective paths substantially parallel to each other and to a given first direction; an unloading station; and pickup and conveying means movable between said loading and unloading stations to transfer said groups simultaneously between said loading and unloading stations.

A preferred, non-limiting embodiment of the present invention will be described by way of example with reference to the accompanying drawings, in which:
Figure 1 shows a schematic plan view of a preferred embodiment of the unit according to the present invention;
Figure 2 shows a schematic view in perspective of a detail of the Figure 1 unit;
Figure 3 shows a schematic view in perspective of a detail in Figure 2;
Figure 4 shows a partly sectioned, schematic side view of the Figure 3 detail in two different operating positions.

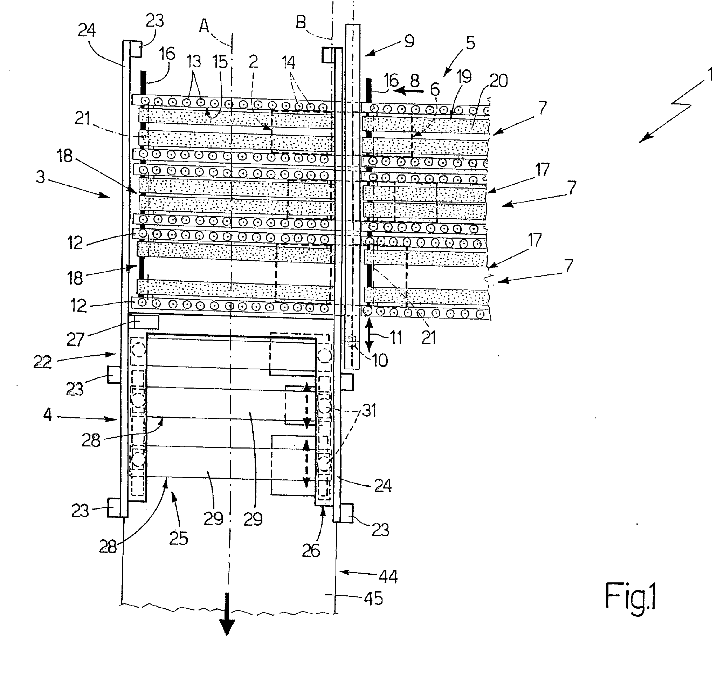

Number 1 in Figure 1 indicates as a whole a unit for transferring panels 2 of wood or similar between a loading station 3 and an unloading station 4.

Station 3 defines the output station of a cutting machine 5, on which panels 2 are obtained by cutting relative substantially parallelepiped-shaped, substantially rectangular-section bars 6 of wood or similar.

Machine 5 comprises a number of (in the example shown, three) conveying units 7, which can be operated independently of one another, and extend in a horizontal direction 8, along respective paths P substantially parallel to one another and to direction 8, through a cutting station 9 where, at each operating cycle of machine 5, a known cutting device 10 cuts bars 6 in a substantially horizontal direction 11 crosswise to direction 8.

Each unit 7 comprises two longitudinal members 12 extending parallel to direction 8, and each having a respective number of guide wheels 13, which are arranged successively in direction 8, are fitted to relative longitudinal member 12 to rotate about respective axes 14 parallel to one another and perpendicular to directions 8 and 11, and, together with wheels 13 of the other longitudinal member 12, define a feed channel 15.

The two longitudinal members 12 are fitted in known manner to a number of fixed guides 16 (only two shown in Figure 1) parallel to one another and to direction 11, and can be moved linearly with respect to each other in direction 11 to selectively adjust the width, measured parallel to direction 11, of relative channel 15 as a function of the width, also measured parallel to direction 11, of relative bar 6.

Unit 7 also comprises two conveying devices 17, 18 located in series in direction 8 to define relative path P; device 17 extends upstream from station 9 to feed relative bar 6 between an input station (not shown) and station 9; and device 18 extends downstream from station 9 to feed relative panel 2 to station 3.

Each device 17, 18 comprises two endless conveyors 19, each having a respective belt 20, which is movable in a vertical plane parallel to direction 8, and is looped about two pulleys (not shown) fitted in rotary manner to relative longitudinal member 12 and rotated in steps - by a known motor not shown (in the example shown, an electric Brushless motor) - about respective longitudinal axes 21 substantially parallel to each other and to direction 11.

Unit 1 comprises a supporting frame 22, in turn comprising a number of pillars 23 divided into two groups located on opposite sides of a longitudinal axis A of unit 1 parallel to direction 11. The pillars 23 in each group are substantially aligned with one another in direction 11, and are connected to one another at their top ends by a cross member 24 substantially parallel to direction 11.

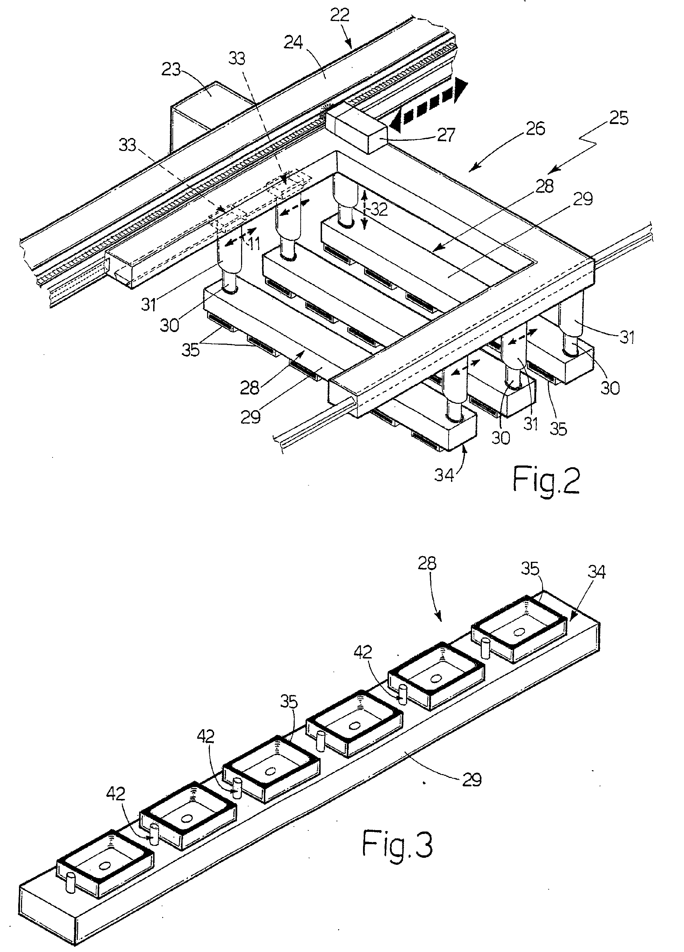

With reference to Figure 2, unit 1 also comprises a pickup and conveying device 25 comprising a slide 26, which is substantially U-shaped with its concavity facing station 4, extends between the two cross members 24, is connected in known manner to cross members 24, and is moved linearly back and forth between stations 3 and 4 by a known actuating device 27.

Slide 26 supports a number of gripping devices 28 equal in number to channels 15, and each comprising a plate 29, which is substantially rectangular parallelepiped-shaped, extends parallel to direction 8, and is of a length, measured parallel to direction 8, substantially equal to the distance between cross members 24. At its free ends, plate 29 is fitted to the output rods 30 of two actuating cylinders 31, which are aligned with each other in direction 8, extend parallel to a vertical direction 32 perpendicular to directions 8 and 11, are operated independently of cylinders 31 of the other plates 29 to move plate 29 between a lowered position and a raised position, and are fitted in sliding manner to slide 26 to move plate 29 linearly in direction 11 under the control of a known actuating device 33.

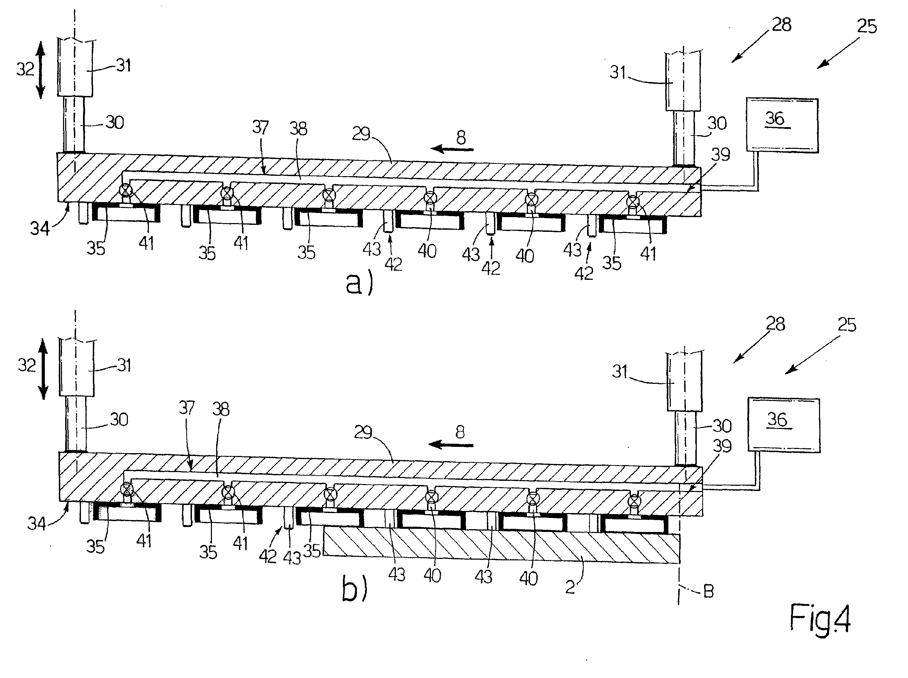

With reference to Figures 3 and 4, on its flat bottom surface 34, plate 29 comprises a number of suction cups 35, which are equally spaced along plate 29 with their respective concavities facing downwards, and communicate with a known pneumatic suction device 36 via a pneumatic circuit 37.

Circuit 37 comprises a feed channel 38, which is normally common to all of suction cups 35, extends through plate 29, and communicates with device 36 through a hole 39 formed at the rear in direction 8; and a number of conduits 40 equal in number to suction cups 35, and each connecting relative suction cup 35 to channel 38 with the interposition of a known valve 41.

Each suction cup 35 is associated with a known sensor 42, which is located outside relative suction cup 35 (in the example shown, downstream from relative suction cup 35 in direction 8), and provides for activating relative valve 41 and, therefore, relative suction cup 35. For which purpose, sensor 42 comprises a pin 43, which extends downwards, parallel to direction 32, from surface 34, and is normally maintained, by a spring (not shown), in an extracted position (Figure 4a) in which pin 43 projects downwards with respect to relative suction cup 35.

In actual use, pin 43 is moved, in opposition to the relative spring (not shown), into a withdrawn position (Figure 4b) by relative panel 2, so that, when pin 43 is engaged by relative panel 2, and since pin 43 is located downstream from relative suction cup 35 in direction 8, the relative suction cup 35 is also engaged fully by relative panel 2. In this way, it is possible to activate only the suction cups 35 engaged completely by relative panels 2, and so prevent leakage of circuit 37 from impairing correct operation of device 36 by activating any suction cups 35 not completely engaged by relative panels 2.

Operation of unit 1 will now be described as of the instant in which:
cutting device 10 has cut a panel 2 off each of bars 6 housed in relative channels 15;
the newly cut panels 2 have been fed to loading station 3 by relative devices 18, so that, at station 3, the rear faces of panels 2 in direction 8 are substantially coplanar with a reference plane B perpendicular to direction 8;
pickup and conveying device 25 is located at loading station 3 so that suction cups 35 all extend downstream from plane B in direction 8; and
gripping devices 28 are set to the raised position.

At this point, pneumatic device 36 is activated; and gripping devices 28 are moved into the lowered position so that relative suction cups 35 engage relative panels 2, and then into the raised position to detach panels 2 from relative conveying devices 18.

Pickup and conveying device 25 is then moved to unloading station 4; gripping devices 28 are moved into the lowered position; and pneumatic device 36 is deactivated to release panels 2 onto a known output conveying device 44 defined by a belt conveyor 45 and for feeding panels 2 in direction 11. In a variation not shown, belt conveyor 45 may be a suction conveyor.

Unit 1 has the following main advantages:
by means of pickup and conveying device 25, panels 2 in all of feed channels 15 can be transferred simultaneously between stations 3 and 4;
locating sensors 42 outside, i.e. downstream from, relative suction cups 35 provides for only activating the suction cups 35 engaged completely by relative panels 2; for preventing leakage of pneumatic circuit 37 from impairing correct operation of pneumatic device 36 by activating any suction cups 35 not completely engaged by relative panels 2; and hence for considerable energy saving;
by selectively combining the movements of slide 26 in direction 11 with the movements of gripping devices 28 in direction 32, panels 2 are released onto conveying device 44 in a predetermined orderly sequence.

## Claims

1. A unit for transferring panels (2) of wood or similar, **characterized by** comprising a loading station (3) for receiving at least two groups of panels (2), said groups each comprising at least one panel (2), and being fed to the loading station (3) along respective paths (P) substantially parallel to each other and to a given first direction (8); an unloading station (4); and pickup and conveying means (25) movable between said loading and unloading stations (3, 4) to transfer said groups of panels (2) simultaneously between said loading and unloading stations (3, 4).

2. A unit as claimed in Claim 1, wherein, for each group of panels (2), said pickup and conveying means (25) comprise gripping means (28) extending along at least the whole length of the relative group of panels (2) measured parallel to said first direction (8).

3. A unit as claimed in Claim 2, wherein said gripping means (28) comprise a number of gripping members (35) activated selectively as a function of said length.

4. A unit as claimed in Claim 3, wherein said gripping means (28) comprise a number of sensors (42), each associated with a relative said gripping member (35); each said sensor (42) being so located as to only engage the relative said group of panels (2) when the relative said gripping member (35) is engaged fully by the relative group of panels (2).

5. A unit as claimed in Claim 4, and also comprising actuating means (41) for activating each said gripping member (35) when the relative said sensor (42) engages the relative said group of panels (2).

6. A unit as claimed in any one of Claims 3 to 5, wherein each said gripping member (35) is defined by a suction cup.

7. A unit as claimed in any one of Claims 2 to 6, wherein said pickup and conveying means (25) comprise supporting means (26) movable between said loading and unloading stations (3, 4) in a second direction (11) substantially crosswise to said first direction (8); said gripping means (28) being movable with respect to said supporting means (26) in a third direction (32) substantially perpendicular to said first and said second direction (8, 11).

8. A unit as claimed in Claim 7, wherein said gripping means (28) are movable in said third direction (32) independently of the other gripping means (28), so that, by selectively combining the movements of the supporting means (26) in said second direction (11) with the movements of the gripping means (28) in said third direction (32), the groups of panels (2) are released at said unloading station (4) in a predetermined orderly sequence.

9. A unit as claimed in any one of Claims 2 to 7, wherein said gripping means (28) are movable with respect to one another in a second direction (11), substantially crosswise to said first direction (8), as a function of the dimensions, measured parallel to said second direction (11), of the relative said groups of panels (2).
